# EUROPEAN PATENT APPLICATION

(11) **EP 4 311 040 A1**
(43) Date of publication of application: **24.01.2024**
(21) Application number: 23186072.7
(22) Date of filing: 18.07.2023
(51) Int. Cl.: H01R 13/6583, H01R 43/16, H01R 13/6585

(54) **SHIELD CONTACT ELEMENT AND METHOD OF MANUFACTURING SUCH A SHIELD CONTACT ELEMENT**

(30) Priority: 21.07.2022 DE 102022118309
(71) Applicant: TE Connectivity Germany GmbH, 64625 Bensheim (DE)
(72) Inventor: PANITZ, Gregor, 64625 BENSHEIM (DE); STARKE, Holger, 64625 Bensheim (DE); WOLF, Marco, 67346 Speyer (DE); KEIL, Kevin, 64625 Bensheim (DE); BOEHM, Luca, 64625 Bensheim (DE)
(74) Representative: Grünecker Patent- und Rechtsanwälte PartG mbB

(57) **Abstract**

Shield contact element for shielding a plug connection, for example a high-voltage plug connection. The shield contact element (100) comprises a cylindrical housing shell (110) extending in the axial direction (114) for receiving a plug connector, for example a high-voltage plug connector, the plug connector for connecting to a plug contact element to form the plug connection. Further, the shield contact element (100) comprises at least one contact lamella (120) extending in the axial direction (114) for creating an electrical connection between the housing shell (110) and a shield (210) for shielding the plug contact element, wherein a contact foot (122) of the contact lamella (120) is arranged in a recess (130) formed in the housing shell (110) to electrically contact the housing shell (110) with the shield (210) in the recess (130).

## Description

The invention relates to a shield contact element and a method of manufacturing such a shield contact element.

The shielding of electro technical devices serves to keep fields away from the devices. These fields occur in particular at higher frequencies and are electric and/or magnetic fields. In the case of high-voltage (HV) cables in particular, it may be necessary to protect the surroundings from the fields emitted by the cable.

Shield contact elements are used, for example, in HV cables for electric or hybrid vehicles. In such HV cables, shielding may be required to keep the other on-board electronics, which operate in the low-voltage range (e.g. 12 or 24 volts), free from interference due to the HV voltages used, for example in the range from about 300 volts to 800 volts.

For this purpose, it is necessary to guide the shielding of the cable also at a plug connector in such a way that an effective shielding and/or a grounding, takes place between a plug and a plug contact element, for example a socket, a header, a cable or an element of the customer, also called customer unit or customer contact element. For this purpose, it is necessary to loop through this shielding during the connection of plug and plug contact element, by a plugging process, by means of a shield contact element. Here, grounding means in particular that an optimal path is provided for the current, for example by providing few obstacles, i.e. many contact points, these contact points have low resistances and thus enable a low overall resistance. In particular, grounding means providing an optimal path for the current, by using many contact points, i.e., a parallel connection, with low resistance along the entire connector system, for example, from cable to customer unit, to enable low overall resistance. This provides optimum grounding for the current.

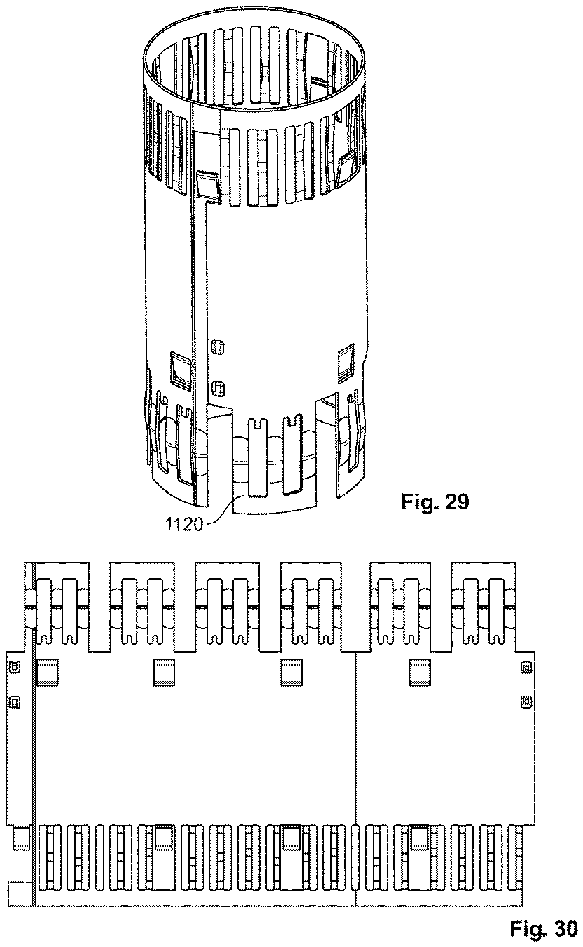

For example, as shown in Fig. 29, a shield contact element is bent from a metal sheet to create a cylindrical body to receive the plug connector. A plurality of contact lamellae 1120 are used to contact the shield contact element to a shield of an HV cable, which is not shown. In the shield contact element, a plurality of contact lamellae is created by stamping the sheet shown in Fig. 30, with a gap between adjacent contact lamellae.

However, with this known shield contact element, there is a risk that due to the gaps between the contact lamellae, the shielding is not sufficient, because the gaps between the contact lamellae cannot shield. However, the gaps cannot be avoided, otherwise at least the flexibility cannot be guaranteed. It is also difficult to manufacture without gaps. For example, a gapless arrangement of the contact lamellae leads to abrasion, which contaminates the plug connector.

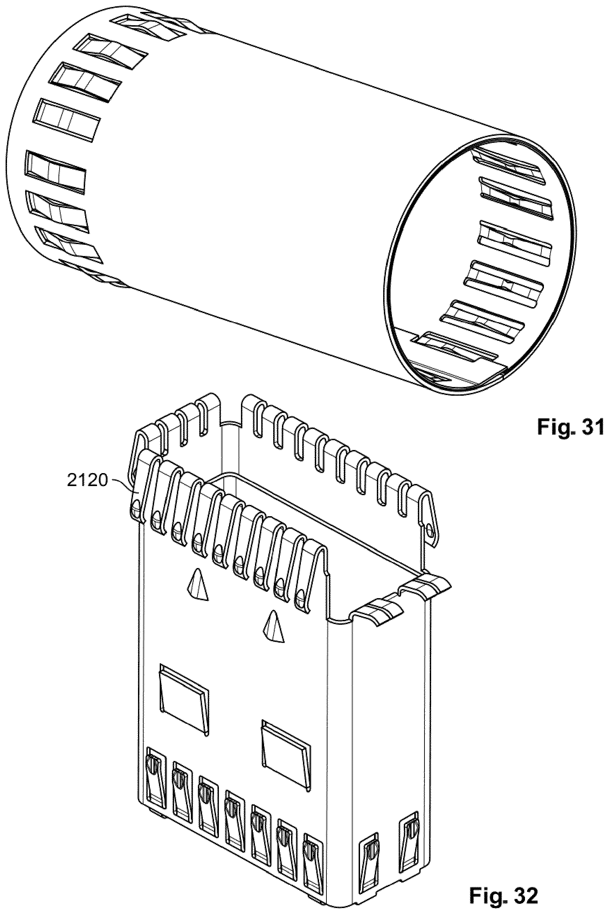

Furthermore, another shield contact element has the problem that it must be constructed in two parts, as shown in Fig. 31. This leads to complex assembly.

Furthermore, another shield contact element has the problem that it has bent contact lamellae 2120, as shown in Fig. 32, which protrude from the housing shell. Thus, a shield not shown, which is applied to the contact lamellae, can only be provided at a distance from the housing shell. This creates a gap that has a large effect on shielding. In general, to compensate for the shielding loss effects of the gap, the ratio of gap to axial overlap must usually be 1 to 5. In other words, a gap of 1 mm requires a 5 mm long overlap to produce sufficient shielding. However, such a long shielding in the axial direction can be problematic with respect to the limited installation space.

Another problem with the solution shown in Fig. 32 is that the grounding path is extended via the U-shaped bent contact lamellae, in particular a conduction path is formed which is U-shaped, i.e. axially forward and backward. This leads to eddy currents, which degrade the shielding.

It is an object of the present invention to overcome the above disadvantages. One object of the invention is to make optimum use of the installation space while improving the shielding. Another object is to simplify the assembly. A further object is to simplify the manufacture of the shield contact.

The above objects are solved by the subject matter of the independent patent claims. Advantageous further developments are the subject of the dependent patent claims.

In particular, the object is solved by a contact foot of a contact lamella, wherein the contact foot is arranged in a recess formed in a housing shell. Thus, the contact foot can electrically contact the housing shell with the shield via the recess.

In other words, this contacting with this contact lamella in the recess allows the current path to be shortened. Additionally, the arrangement allows that an extended current path, for example via a U-turn of the contact lamella, is prevented.

As used herein, recess means a hollow body open on one side. The recess can be obtained, for example, by deep-drawing a sheet. The sheet is then bent to form the cylindrical housing shell. The recess causes the housing shell to form a continuous shield in the area of the contact lamella. Thus, shielding capability is improved because holes between contact lamellae, such as shown in Fig. 29, are avoided. Further, the recess allows the gap between the housing shell and the shield to be reduced, such as discussed above with respect to Fig. 32. This further improves the shielding capability.

Other advantages of the invention are discussed below.

In particular, the shield contact element for shielding a plug connection comprises a cylindrical housing shell extending in the axial direction.

Here, a cylinder is understood to be a geometric body in which two parallel, planar, congruent, base surfaces are connected to each other by a shell, which is also referred to here as a housing shell. The base surface is, for example, circular, elliptical or polygonal, in particular rectangular.

Such a housing shell can serve to accommodate a plug connector, for example a high-voltage plug connector. The plug connector serves, for example, to connect devices, for example a battery and a motor, via the plug connector by means of a plug contact element, for example a cable, a high-voltage cable of a customer contact element, a header or a socket. In particular, the shield contact element may comprise such a plug connector.

In this context, a plug connector is understood to be an element that serves to separate and connect electrical lines. Positive locking, also referred to as a form-fit connection, of the plug parts aligns the connecting parts appropriately, in particular. The interlocking of at least two connection partners creates positive-locking connections. As a result, the connecting partners cannot become detached even without or in the event of interrupted force transmission. In other words, in the positive locking connection, one connection partner is in the way of the other.

Furthermore, the shield contact element comprises a contact lamella extending in the axial direction. The contact lamella thus extends in the same direction as the housing shell.

As used herein, a contact lamella (herein also referred to as a lamella), is a platelet that is preferably located in a structure of similarly arranged, often parallel, lamellae. A lamella is a small, flat object. The contact lamella is therefore smaller than the housing shell.

The contact lamella is used to create an electrical connection between the housing shell for shielding the plug and a shield for shielding the plug contact element, for example the high-voltage cable. In other words, the contact lamella is used to create an electrical connection between two shield components, for example a shield component, i.e. the housing shell, and the customer unit or a shield component and the cable shield. As used herein, shielding is understood to protect, for example, electro technical equipment from electrical and/or magnetic fields occurring in particular at higher frequencies. Furthermore, the contact lamella is used to allow undesired shield currents to run to ground via the shortest possible path by means of optimum contacting. Therefore, the number of contact lamellae and the size of the contact resistance are relevant.

In other words, the cylindrical housing shell of the shield contact element extends in the axial direction. The housing shell shields the plug connector, which makes it possible to plug two partners in the axial direction, for example, to connect a device with a plug contact element. The axial direction is therefore the mating direction.

Furthermore, the shield contact element comprises the contact lamella, which enables the housing shell to be connected to the shield of the plug contact element, for example of the HV cable, for shielding the plug in the axial direction. Thus, an electrical connection can be made from the shield of the plug contact element, for example of the HV cable, to the housing shell, which is necessary for shielding. Herein, connectors may be, for example, a plug or a header. The plug contact element may be, for example, the counterpart of plug or header. Furthermore, the plug contact element can also be a cable or a customer unit. Thus, the plug can be connected to the plug contact element. In this step, the shield of the plug is also connected to the shield of the plug contact element.

In other words, the shield of the plug contact element, for example the HV cable, is connected to the shield of the plug also referred to as the shield of the plug. Furthermore, the shield can be connected to shield of a header, also referred to as a socket. The shield of the header is connected to the customer unit. Thus, a current path is created on the shield, from the cable to the customer unit. Thus, many contacts with low resistances are required between the components. These contacts are used for optimal grounding for the connector system. The above contact lamella reduced little radiation because shield currents can flow away quickly. In particular, the contact lamella includes contact feet. A first contact foot is used to create a contact between the contact lamella and the housing shell, and a second contact foot is used to create a contact between the contact lamella and the shield of the HV cable.

Further, the shield contact element includes a recess formed in the housing shell. As described above, the recess is a hollow body open on one side. In other words, the recess is formed perpendicular to the axial direction. Thus, the recess can be either a projection or an indentation formed by the housing shell perpendicular to the mating direction. The recess, i.e. the hollow body open on one side, is thus in particular open to an interior space formed by the housing shell to accommodate the plug connector, and forms with the housing shell a closed surface in the area of the contact lamella to the surroundings, which is to be shielded by the housing shell.

Alternatively, the recess can be open to the surrounding...

Furthermore, the recess serves to allow the contact foot in the recess to make electrical contact between the housing shell and the shield. Because the recess is formed from the housing shell, the housing shell with the recess compensates for gaps between the contact lamellae. In particular, the housing shell and recess are formed in one piece from a sheet, for example by deep drawing.

The fact that the recess is a projection or indentation perpendicular to the mating direction, i.e. it is formed in the radial direction, reduces a gap between the shield and the shield contact element. This can save installation space and/or improve shielding. With the same radial installation space in diameter compared to comparable solutions without a recess, the overlap behind the lamella allows it to be designed axially longer without loss of shielding effect. At the same time, the axial length of the shield can remain substantially the same. This applies in particular to a contact lamella bent by 180°. In comparable solutions without a recess for a contact lamella bent by 180°, for example, the length of the lamellae is always also part of the length of the shield. The comparable solutions without a recess for a contact lamella bent by 180°, for example, therefore require more installation space.

Usually, the housing shell has a diameter of approx. 10 mm to 50mm. At the same time or alternatively, the recess projects 0.5 mm to 2 mm perpendicular to the mating direction.

Further, the recess may extend from one axial end of the cylindrical housing shell in the axial direction to the other end of the housing shell. The cylindrical housing shell has two ends, namely the edges between the base and the shell of the cylinder. The arrangement of the recess at one end leads to optimum utilization of the installation space and easy handling for plugging. In particular, the recess can extend only to a central region of the housing shell.

Further, the contact lamella may include a second contact foot, the second contact foot projecting from the housing shell opposite the direction of the recess.

As discussed above, the recess opens perpendicular to the axial direction, i.e. the mating direction. In the case where the recess is open to an interior space, the second contact foot protrudes into the interior space. If the recess is open to the environment, the second contact foot protrudes outward from the housing shell.

Such a design enables the second contact foot to be positively connected to the shield. By plugging the plug connector, the second contact foot is pressed in the direction of the first contact foot and a mechanical and electrical connection of the shield and the housing shell occurs. In other words, the contact lamella is a spring element, as for example one of the contact feet is directly or indirectly connected to the housing shell.

A spring is a usually metallic technical component that can be deformed sufficiently elastically in practical use. The elastic deformation of springs is usually bending or torsion. Thus, the contact lamella enables a positive and/or force locking connection.

According to an example of a connection, the contact lamella may include a third contact foot. The contact lamella thus rests with two points either on the shield or on the housing shell. Particularly advantageous is when the first contact foot and the third contact foot are arranged in the recess and the second contact foot is adapted to press against the shield. In other examples, the second contact foot may be disposed between the first and third contact feet. Thus, the ends of the contact lamella are protected in the recess. Thus, during mating, the gap at the base of the contact lamella is closed, thereby increasing the normal forces because this creates a triangle of forces on both legs of a bending beam. The third contact foot point thus enables a higher normal force and a second electrical current path, both of which lower the contact resistance.

Further, the shield contact element may include a U-shaped connector having two legs for securing the contact lamella to the housing shell.

In other words, the contact lamella is formed in one piece on the housing shell, which means that both parts are made, for example, from one piece or from inseparable parts. Such a one-piece design simplifies the handling of the shielding element.

Such a shield element can be produced particularly easily if the first contact foot is arranged in the recess by bending the U-shaped connector.

In particular, one leg of the U-shaped connector and the housing shell may be connected via the recess. In other words, the U-shaped connector and the housing shell engage in the same area of the base. This allows the U-shaped connector to be bent in only one direction to allow the contact foot to be located in the recess, simplifying fabrication.

In particular, a leg of the U-shaped connector may be fixed to an axial end of the cylindrical housing shell. For example, if the recess extends from an axial end, as discussed above, the U-shaped connector may also extend from that axial end. This allows for a particularly compact design.

Furthermore, the shield contact element may comprise an offset piece. The offset piece is arranged between a leg of the U-shaped connector and the housing shell. This allows the U-shaped connector to be offset in the direction of the recess. Such an offset piece enables the bending radii to be optimized and particularly little installation space is required.

It is particularly advantageous if the U-shaped connector, the offset piece, the contact lamella and the housing shell are all in one piece.

Further, the shield contact element may comprise a plurality of contact lamellae. For a description of each of the plurality of contact lamellae, reference is made to the above description.

In particular, two adjacent contact lamellae are arranged with a distance between them. This allows the contact lamellae to be manufactured particularly easily, for example the contact lamellae can be punched so that the area between the contact lamellae is sheared off.

Further, a spacing between adjacent contact lamellae creates that adjacent contact lamellae have no friction surface and thus cleanliness is increased as there is less abrasion from particles. A plurality of contact lamellae is advantageous for interconnection properties and shielding.

In addition, a large number of contact lamellae is advantageous for the mechanical and electrical connection properties, i.e. for the current path, and the shielding. The number of contact lamellae allows the normal force due to sliding friction of the lamellae on the contact partner to be dimensioned. Contact transfer resistances, which should be low for an optimal current path, depend on the electrical material properties and the (mechanical) normal force. Furthermore, the mating force may be limited, for example, by the fact that it must be suitable for manual assembly or must be dimensioned to prevent wear of the surfaces.

Further, the housing shell of the shield contact element may include two opposing fastening protrusions. These fastening protrusions are formed from the housing shell. Like the recess described above, the fastening protrusions are hollow bodies open on one side. In other words, the fastener protrusions are formed perpendicular to the axial direction. They have little or no effect on the shielding, since they do not result in a gap in the shield. In other words, the goal is that the fastening protrusions are not open. They are deep-drawn without gaps or torn out of the housing shell on one side without gaps. This avoids gaps in the shielding jacket. Depending on the shielding requirements, however, certain gaps or openings vmay be permitted.

The fastening protrusions protrude outward from the housing shell to brace an insulating shield contact housing for fastening the shield contact element. The shield contact housing thus presses against the opposite fastening protrusions, fixing the shield contact housing and shield contact element in position relative to each other.

Further, the housing shell of the shield contact element may include a fastening element formed from the housing shell. Like the recess described above, the fastening element is a hollow body open on one side. In other words, the fastening element is formed perpendicular to the axial direction. It does not affect the shielding, or affects it only insignificantly, since it does not lead to any gap in the shield. In other words, the goal is that the fastening element is not open. It is deep-drawn without gap material or torn from the housing shell on one side without a gap. This avoids gaps in the shield cladding. Depending on the shielding requirements, however, certain gaps or openings can be allowed
The fastener protrudes inwardly from the housing shell to lock an isolative housing of the plug connection. For example, the plug connection housing includes a groove that cooperates with the fastening element to form a bayonet lock. A bayonet lock is a mechanical connection of two cylindrical parts in their longitudinal axis, i.e. the mating direction, that can be quickly made and released. The parts are connected by inserting them into each other and turning them in opposite directions, and are also separated again in this way.

Of course, one outwardly projecting fastener and two opposing inwardly projecting fastener returns may be provided. For the description of these parts, reference is made to the above description.

Further, the present invention comprises a shield contact system having an insulating shield contact housing for receiving inside a shield contact element as described above. The shield contact housing has a stop on the inside. This stop restricts the axial freedom of movement of the shield contact element in the shield contact housing with the recess formed in the shell housing.

For further features of the shield contact housing, please refer to the above description.

Furthermore, the shield contact system may further comprise a housing of the plug connection. For further features of the housing of the plug connection, reference is made to the above description.

Furthermore, the present invention relates to a method for manufacturing a shield contact element for shielding a plug connection. In particular, the method serves for manufacturing a shield contact element as described above.

The procedure includes the steps:
providing a sheet metal,
forming at least one recess in the sheet,
bending the sheet metal into a cylindrical housing shell extending in the axial direction for receiving a plug connector, the plug connector for connecting to a plug contact element to form the plug connection, in particular the housing shell is used for contacting a customer unit on one side and for receiving a plug connector, for example a high-voltage plug connector, on the other side,
providing at least one ion axial direction extending contact lamella for creating an electrical connection between the housing shell and a shield for shielding the plug contact element,
wherein a contact foot of the contact lamella is disposed in the recess formed in the housing shell to contact the housing shell with the shield in the recess.

In particular, a sheet is a rolled metal product that is delivered as a sheet and whose width and length are much greater than its thickness. Any material, especially metal, used for shielding may be understood herein as sheet.

Thus, a shield contact element, which has been described above, for example, can be produced particularly easily. For the further features, reference is made to the above description.

The method may further comprise the step of:
punching the at least one contact lamella from the provided sheet metal and
wherein by bending the sheet a U-shaped connector is created between the housing shell and the contact lamella so that the contact foot is arranged in the recess.

Thus, as already described above, a one-piece shield contact element can be produced particularly easily.

The method may additionally or alternatively comprise the step of deep drawing. The deep drawing step may form at least one of the following elements in the sheet:
- the deepening;
- the two fastening protrusions formed from the housing shell, the fastening protrusion protruding in particular outwardly from the housing shell after bending and facing each other, in particular to brace a shield contact housing; and
- a fastening element formed from the housing shell, the fastening element protruding in particular inwardly from the housing shell after bending, in particular to lock a housing of the plug connection.

The method may further comprise steps of assembling with at least one of the shield contact housing and the housing of the plug connection to create a shield contact system.

For a better understanding of the present invention, it will be explained in more detail with reference to the examples of embodiments shown in the following figures. In this context, identical parts are provided with identical reference signs and identical component designations. Furthermore, some features or combinations of features from the different embodiments shown and described may also represent independent, inventive solutions or solutions according to the invention.

It show:
- **Fig. 1**: an example of a shield contact system;
- **Fig. 2**: an example of a shield contact element;
- **Fig. 3**: a top view of the shield contact element according to Fig. 2;
- **Fig. 4**: a detailed view of element IV of the shield contact element from Fig. 2;
- **Fig. 5**: a sectional view of Fig. 4 and further details;
- **Fig. 6**: a detailed view of element VI of the shield contact element from Fig. 2;
- **Fig. 7**: a sectional view of Fig. 6;
- **Fig. 8**: a top view of the shield contact element according to Fig. 2 and details;
- **Fig. 9**: a detailed view of element IX of the shield contact element from Fig. 2;
- **Fig. 10**: a sectional view of Fig. 9;
- **Fig. 11**: a top view of the shield contact element according to Fig. 2 and details;
- **Fig. 12**: another example of a shield contact system before assembly;
- **Fig. 13**: a sectional view of the shield contact system from Fig. 12 after assembly;
- **Fig. 14**: a detailed view of element XIV of the shield contact system from Fig. 13;
- **Fig. 15**: a detailed view of element XV of the shield contact system from Fig. 13;
- **Fig. 16**: another example of a shield contact system before assembly;
- **Fig. 17**: a top view of the shield contact system from Fig. 16;
- **Fig. 18**: a sectional view of the shield contact system from Fig. 16;
- **Fig. 19**: another example of a shield contact element;
- **Fig. 20**: a detailed view of element XX of the shield contact element from Fig. 19;
- **Fig. 21**: a detailed view of element XXI of the shield contact element from Fig. 19;
- **Fig. 22**: a detailed view of element XXII of the shield contact element from Fig. 19;
- **Fig. 23**: another example of another shield contact system before assembly;
- **Fig. 24**: another view during assembly of the shield contact system from Fig. 23;
- **Fig. 25**: another view during assembly of the shield contact system from Fig. 23;
- **Fig. 26**: a sectional view after assembling the shield contact system from Fig. 25;
- **Fig. 27**: a detailed view of element XXVII of the shield contact system from Fig. 26;
- **Fig. 28**: another example of a shield contact element;
- **Fig. 29**: a shield contact element with gaps;
- **Fig. 30**: a sheet for a shield contact element according to Fig. 28;
- **Fig. 31**: a two-part shield contact element; and
- **Fig. 32**: a shield contact element with a gap.

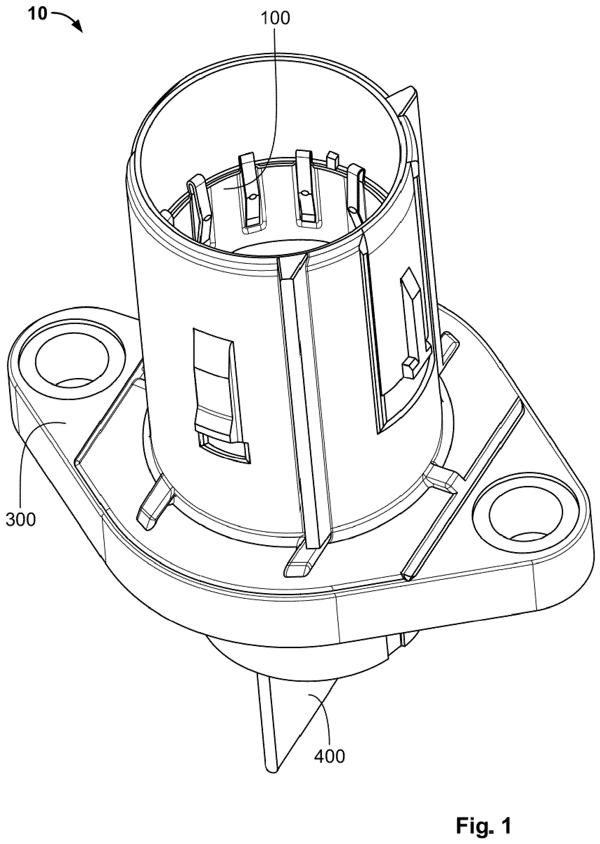

The present invention will now be described with the aid of the figures. Fig. 1 shows an example of a shield contact system 10 of the socket. Thus, one half of a system not shown is shown which comprises, for example, the shield contact system 10 of the socket which can be contacted with a counterpart. The shield contact system includes a shield contact element 100 for shielding a plug, which is not shown, and a shield contact housing 300 for holding the shield contact element. A housing 400 of the plug connector hold the plug. The shield contact element 100 may include or comprise a conductive material, in particular a metal. The shield contact housing 300 and the housing 400 may contain or consist of an insulating material, in particular a plastic.

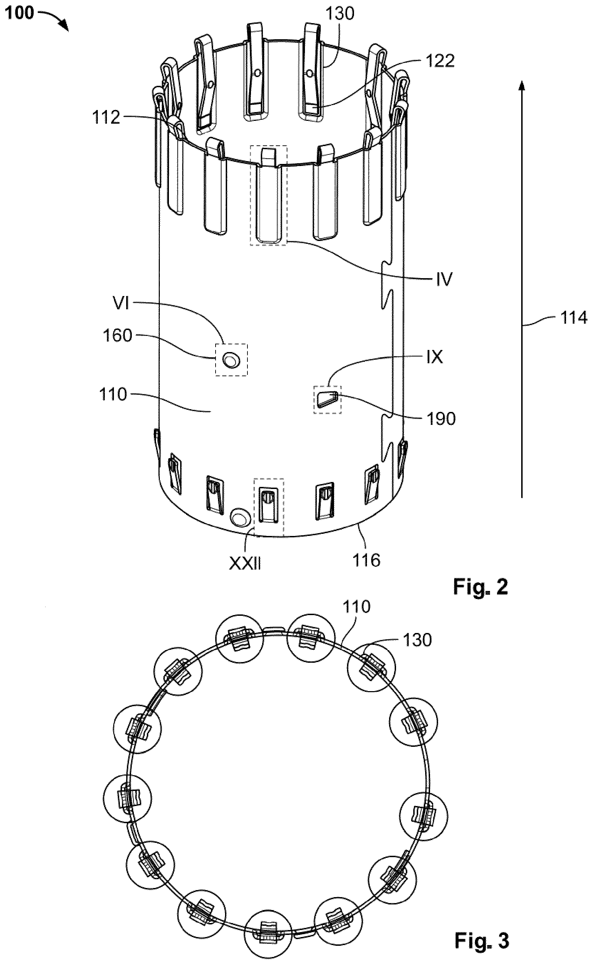

Fig. 2 shows an example of a shield contact element 100. The shield contact element 100 comprises a cylindrical housing shell 110 extending in the axial direction 114 for receiving a plug connector that is not shown. Thus, the axial direction 114 corresponds to the mating direction of the plug connector. By plugging, a plug contact element not shown is connected to realize the plug connection. In the axial direction, the housing shell 110 has a first end 112 and an opposite second different end 116. For example, the plug contact element is used to attach a high-voltage cable or a recess in a customer contact element, for example a control apparatus made of metal or a customer unit, to which the shielding is transferred or forwarded.

Furthermore, the shield contact element 100 comprises in total a plurality of contact lamellae, in this case for example 13, extending in the axial direction 114. Fig. 3, a top view of the shield contact element of Fig. 2, shows that the plurality of contact lamellae are evenly distributed. It is understood that one contact lamella is sufficient to create an electrical connection between the housing shell 110 and the shield, which is not shown, for shielding the plug contact element. Thus, it results that the housing shell and the shield serve to shield a connector system, i.e., plug connector and header/socket, or to shield an assembly, i.e., a connector system and a cable.

A space is provided between adjacent contact lamellae. For example, the plurality of contact lamellae is manufactured by punching by shearing off the area between the contact lamellae.

Further, Figures 2 and 3 in particular show that a first contact foot 122 of the contact lamella is disposed in a recess 130 formed in the housing shell 110. As described above, here the recess 130 is a bulge formed perpendicular to the axis 114. Thus, in the recess 130, the first contact foot 122 of the contact lamella can electrically contact the housing shell 110. The shield, which is not shown, can then be contacted via the contact lamella. It should be taken into account that in the non-contacted state, the first contact foot 122 does not necessarily have to be in contact with the housing shell. It may be provided that the first contact foot 122 is permanently detachably or non-detachably connected to the housing shell.

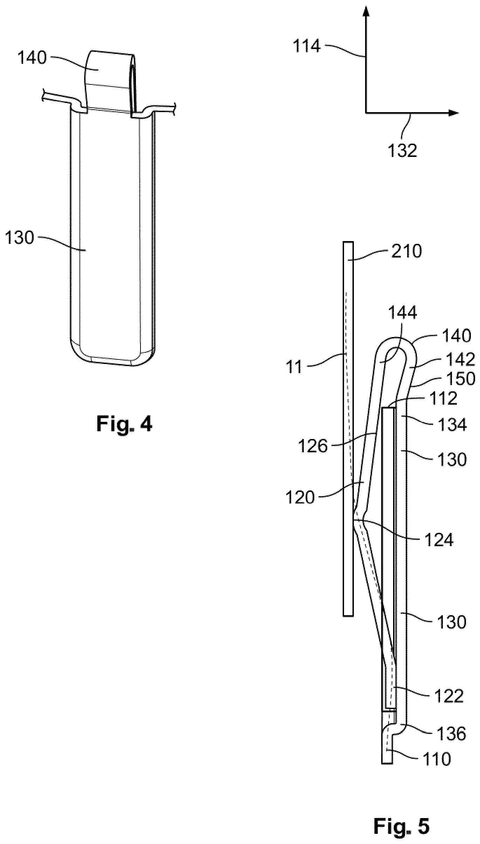

Further details of the contact lamella can be seen in Fig. 4, a detailed view, of a recess 130 and the contact lamella 120 of the shield contact element 100 of Fig. 2, and Fig. 5, a sectional view of Fig. 4 showing further details.

For example, as shown in Fig. 5, a recess 130 is formed in the housing shell 110. In particular, it results that the recess 130 is formed in the direction 132 perpendicular to the axial direction 114 in which the housing shell 110 extends.

For example, as shown in Fig. 5, the recess 130 extends from one axial end 112 of the cylindrical housing shell in the axial direction 114 toward the other end (reference numeral 116 in Fig. 2) of the housing shell 110. In particular, the recess has a first axial end 134 and a second axial end 136, the second axial end being located between the axial ends 114, 116 of the housing shell 110.

Elements are further provided at the axial end 112 of the cylindrical housing shell 110 to fix the contact foot 122 of the contact lamella 120 to the housing shell 110. Alternatively, according to an example not shown, the contact foot 122 and the housing shell 110 may be of a two-piece design, or the contact foot 122 may be fixed to any portion of the housing shell 110.

Here, the elements may include an offset piece 150 disposed at the axial end 112. Further, the elements may comprise a U-shaped connector 140. In particular, the U-shaped connector 140 comprises two legs 142, 144 for fixing the contact lamella 120 to the housing shell 110 via the offset piece 150. In particular, the offset piece 150 is provided to offset the U-shaped connector 140 in the direction 132 of the recess 130. This allows the bending radius of the U-shaped connector to be optimized so as to save installation space. The U-shaped connector is used here in particular so that the contact lamella 120 and the housing shell can be designed as a single piece.

Furthermore, to save installation space, it is provided that the offset piece 150 is connected in the recess 130 at the axial end 112 of the housing shell. In other words, the leg 142 is connected here to the axial end 134 of the recess 130 via the offset piece 150.

The second leg 144 of the U-shaped connector 140 holds the contact lamella 120. In particular, the U-shaped connector 140 may be formed by bending a sheet of metal. The legs 142, 144 are opposite each other. The middle portion, for example the bent portion, connects the opposing legs.

Furthermore, it can be seen from Fig. 5 that the contact lamella 120 can be attached to the U-shaped connector, wherein the contact lamella 120 can comprise the first contact foot 122, a second contact foot 124 and a third contact foot 126. The second contact foot 124, which is located here between the first and third contact feet, protrudes from the housing shell 110 opposite the direction 132 of the recess 130. Thus, the second contact foot 124 serves for positive connection to a shield 210. The embodiment shown here has the advantage that the first contact foot 122 is protected during mating. However, the second contact foot may also be located at an axial end of the contact lamella, according to an example not shown.

As Fig. 5 shows, the third contact foot 126 can be arranged in the recess 130, for example at the axial end. This allows the second contact foot to be pressed against the shield particularly efficiently.

The dashed line 11 in Fig. 5 shows how the current path, also referred to as the conduction path, extends between the shield 210 and the housing shell 110. In particular, the placement of the first contact foot 122 in the recess allows the current path to be free of turbulences. In other words, the conduction path, for example to ground the shield, does not have to pass over the elements 140, 150 to contact the shield 210 with the housing shell 110. Thus, the overall resistance is lower and the shielding characteristics are improved.

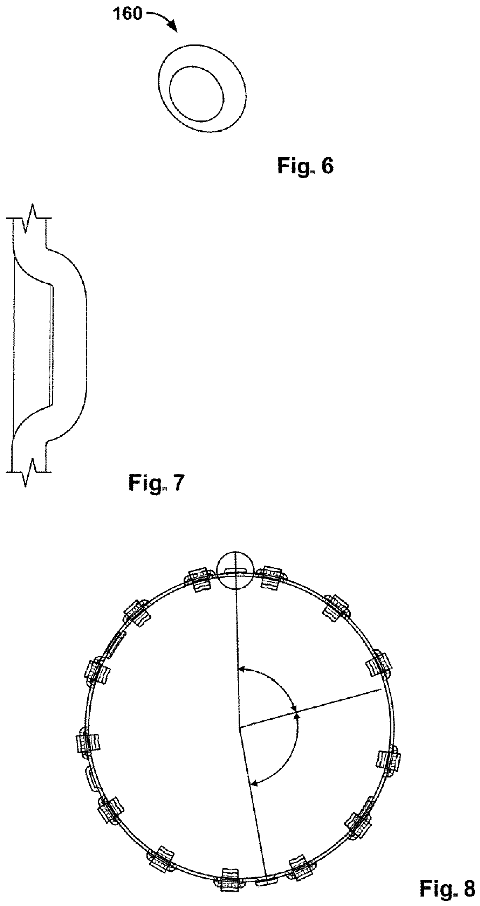

Further, Fig. 2 shows that the housing shell 110 may include a fastening protrusion 160. The fastening protrusion 160 is described in Figs. 6 to 8. Fig. 6 shows that the fastening protrusion 160 protrudes outwardly from the housing shell 110. Thus, it can brace with a shield contact housing. Fig. 7 shows a sectional view of the fastening protrusion.

Fig. 8 shows that two opposing fastening protrusions 160 can be provided. Here, for example, the angle between the fastening protrusions is 170°. Thus, the fastening protrusions 160 can brace themselves particularly well with the shield contact housing.

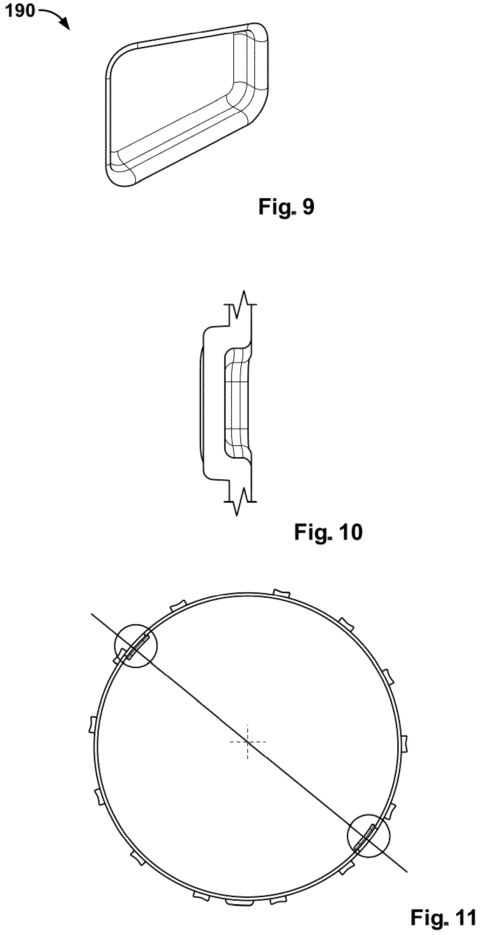

Further, Fig. 2 shows that the housing shell 110 may include a fastening element 190. The fastening element 190 is described in Figs. 9 to 11. Fig. 9 shows that the fastening element 190 protrudes inwardly from the housing shell 110. Thus, it can lock the housing of the plug connection. Fig. 10 shows a sectional view of the fastening element.

Fig. 9 shows that two opposing fastening elements 190 can be provided. Here, for example, the angle between the fastening element is 180°.

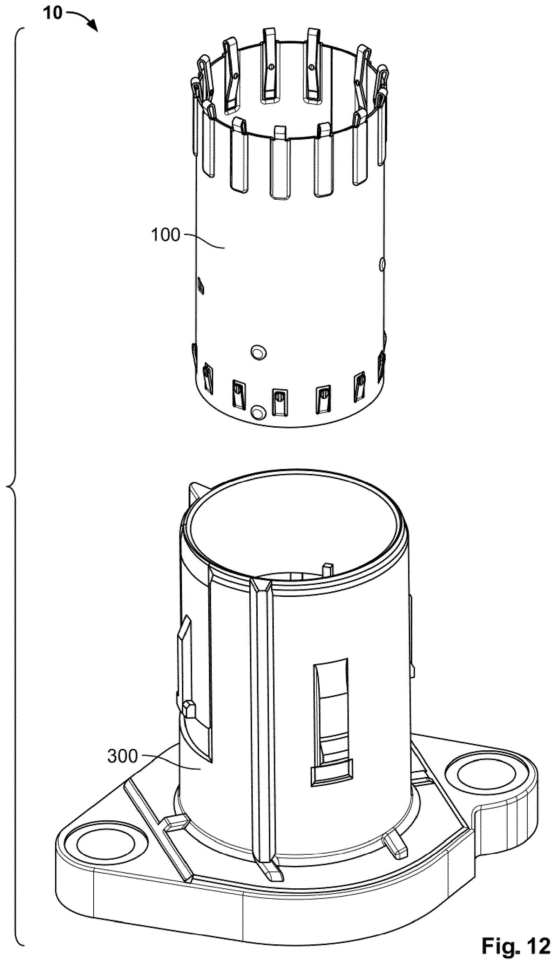

Fig. 12 shows an example of a shield contact system 10 prior to assembly. The shield contact system 10 includes a shield contact element 100 received in a shield contact housing 300. For a description of the shield contact element 100 and the shield contact housing 300, reference is made to the above description.

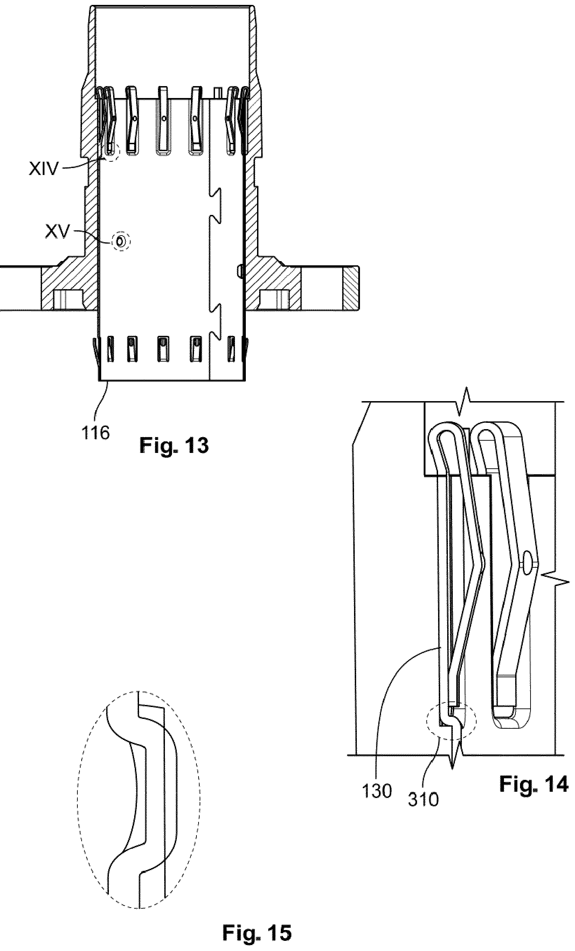

Fig. 13 shows a section of the shield contact system of Fig. 12 after assembly. In particular, the shield contact housing 300 allows the recesses described above to be provided at only one end of the shield contact element 100. At the end 116, the shield contact element 100 protrudes into a device not shown, for example, so that the recesses described above can be omitted, since the device housing provides the necessary shielding.

Fig. 14 shows a detailed view of element XIV of the shield contact system from Fig. 13. In particular, the shield contact housing has a stop 310 on the inside. Thus, the stop 310 protrudes perpendicular to the mating direction. Thus, the stop 310 can cooperate with the recess 130 formed in the housing shell so that the axial freedom of movement of the shield contact element 100 in the shield contact housing 300 is restricted.

Fig. 15 shows a detailed view of element XV of the shield contact system from Fig. 13. The fastening protrusions can thus brace the shield contact element in the shield contact housing. Furthermore, an opening not shown can be provided in the shield contact housing. Inserting the housing of the plug connection, which is not shown, then locks the fastening protrusions in the opening.

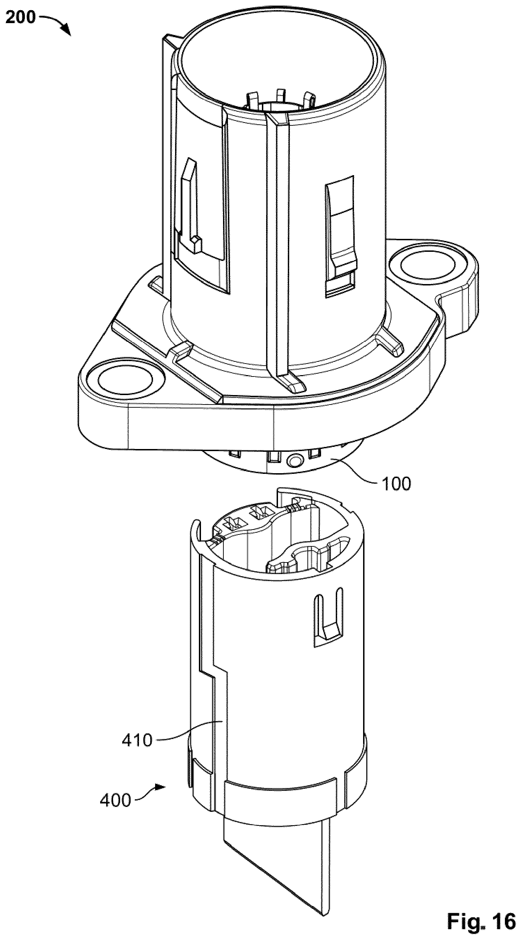

Fig. 16 is another example of a shield contact system prior to assembly. The shield contact system 10 includes a shield contact element 100 received in a shield contact housing 300. Further, the shield contact system includes a housing 400 of the plug connection.

For the description of the shield contact element 100 and the shield contact housing 300, reference is made to the above description. Not shown here is that the shield contact system may comprise only the shield contact element 100 and the housing 400 of the plug connection.

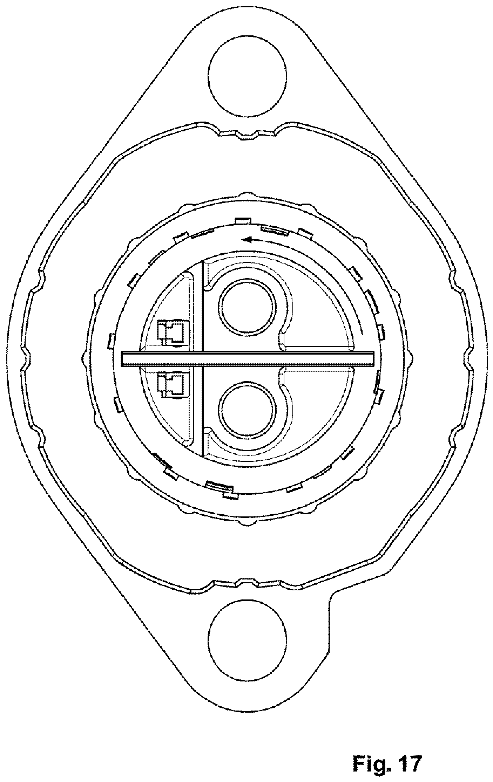

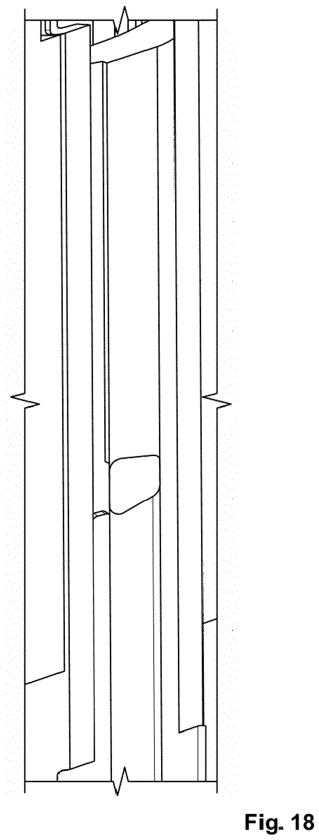

In particular, the housing 400 of the plug connection includes a groove 10 on the outside of the housing extending from an axial end of the housing 400 in the axial direction and extending in a central portion of the housing perpendicular to the axial direction. Further, Fig. 17 shows a top view of the shield contact system of Fig. 16, and an arrow indicating a direction of rotation to lock the housing 400 in the shield contact element. Fig. 18 is a sectional view of the assembled shield contact system of Fig. 16.

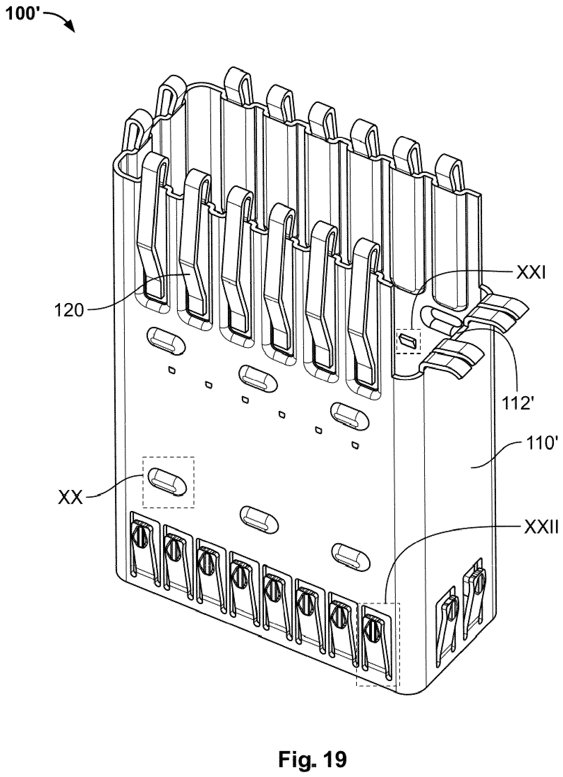

Another example of a shield contact element 100' is shown in Fig. 19. The shield contact element 100' differs from the shield contact element 100 in that the base of the cylindrical housing shell 110' is rectangular and not round as in Figures 1 to 18.

The contact lamella 120 and the elements for connecting the contact lamella 120 to the housing shell 110' are the same or similar. For a description, reference is made to the figures above, in particular to Fig. 5. It can be seen from Fig. 19 that here the recess is open to the outside, whereas the recess in Figs. 1 to 18 is open to the inside. An alternative direction of the recess is an example not shown in the figures.

Furthermore, Fig. 19 shows that the housing shell 110' has an opening extending in the axial direction from the end 112'. This opening may be provided by external requirement conditions. Shielding can be effected by further parts not shown.

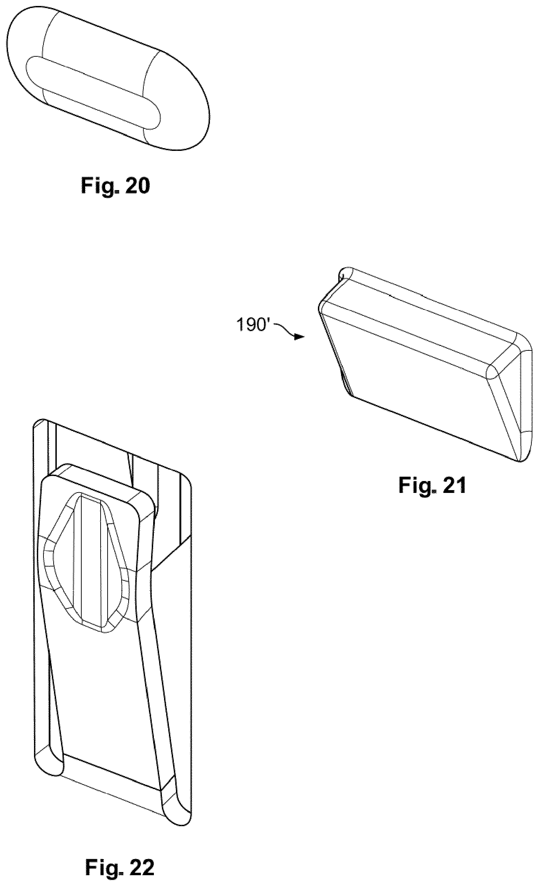

Fig. 20 shows a detailed view of element XX of the shield contact element from Fig. 19. This is a further embodiment of a fastening highlighting, as already described in Fig. 6. Here the shape is elliptical, for example.

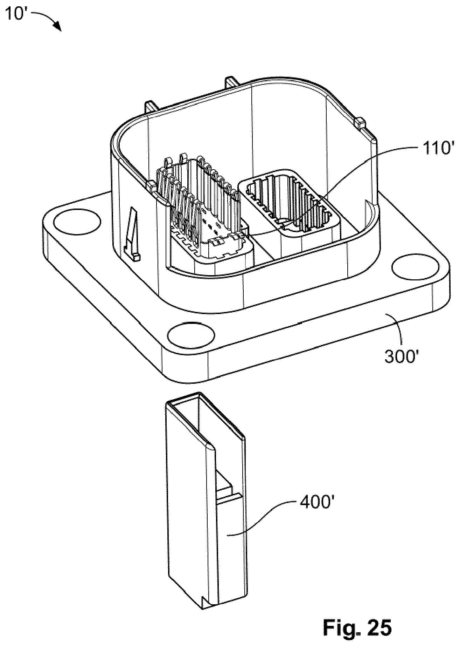

Fig. 21 shows a detailed view of element XXI of the shield contact element of Fig. 19 This shows a further embodiment of a fastening element, such as described in Fig. 9. Unlike in Fig. 9, the fastening element 190' of Fig. 22 locks by not elastically deforming the housing 400' shown in Fig. 25.

Fig. 22 is a detailed view of element XXII of the shield contact element of Figs. 2 and 19. This is an example of a contact part for fixing the shield contact elements 100, 110' in a housing, for example, as discussed above with respect to Fig. 13. In particular, gaps may be provided here as the housing provides the necessary shielding.

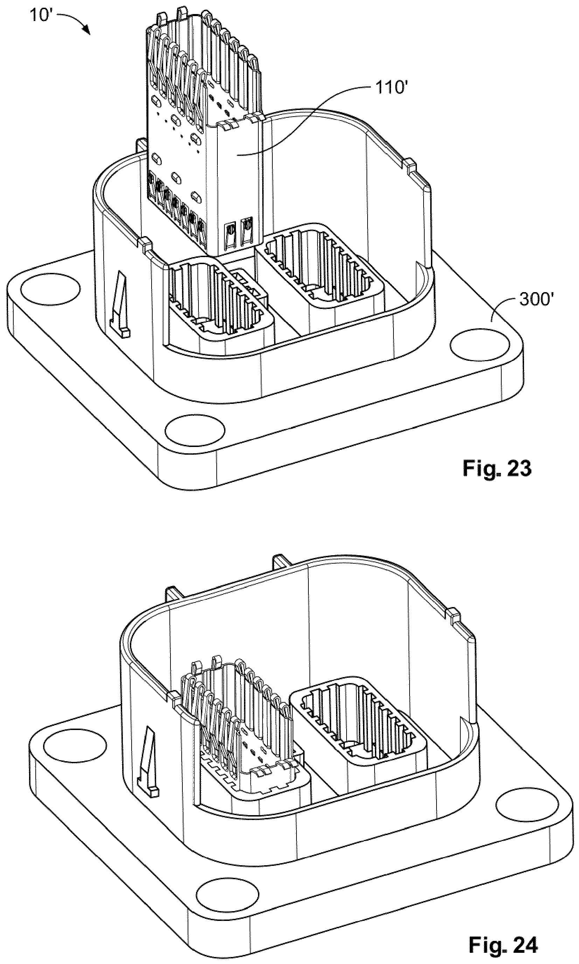

Fig. 23 shows another example of a shield contact system 10' before assembly. The shield contact system 10' includes a shield contact element 100' received in a shield contact housing 300'. For a description of the shield contact element 100', reference is made to the above description. For the description of the shield contact housing 300', reference is made to the above description of the shield contact housing 300.

Fig. 24 shows another view during assembly of the shield contact system 10' of Fig. 23.

Fig. 25 is another example of a shield contact system 10' prior to assembly. The shield contact system 10' includes a shield contact element 100' received in a shield contact housing 300'. Further, the shield contact system includes a housing 400' of the plug connection.

For the description of the shield contact element 100' and the shield contact housing 300', reference is made to the above description. Not shown here is that the shield contact system can comprise only the shield contact element 100' and the housing 400' of the plug connection.

In particular, the housing 400' is cylindrical with a rectangular base and the shield contact housing 300' has a cylindrical opening with a rectangular base. Thus, with such a non-rotationally symmetrical geometry, twisting of the parts is not possible.

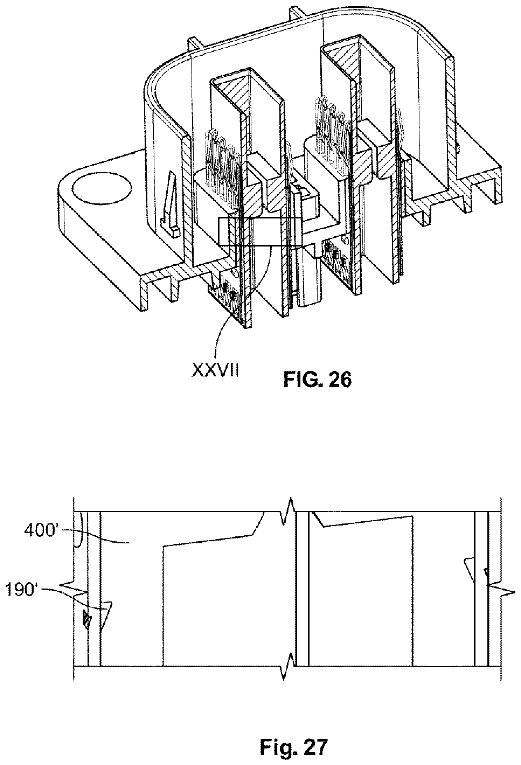

Fig. 26 is a sectional view after assembling the shield contact system of Fig. 25.

Fig. 27 is a detailed view of element XXVII of the shield contact system from Fig. 26. In particular, Fig. 27 shows that the housing 400' is not elastically deformed in the region of the fastening element 190'. Thus, the housing 400' and the shield contact element 100' are inseparably connected.

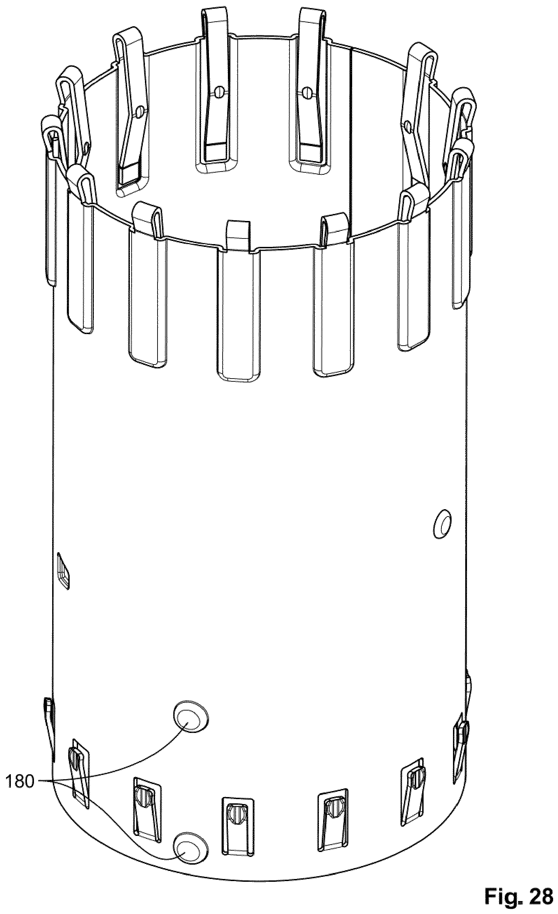

In accordance with another example, as shown in Fig. 28, orientation protrusions 180 may be provided at an axial end of the housing shell. The orientation protrusions are shaped similar to the fastening protrusions described above. The difference is that a plurality of orientation protrusions are provided along the axial direction. They are formed in the same manner as the fastening member, and reference is made to the above description. It is not shown that the orientation protrusion may be formed by an element extending in the axial direction.

Although not shown in the figures, the housing shell 110, 110' may be formed by bending a sheet of metal into a cylindrical housing shell extending in the axial direction for receiving a plug connector.

Even if not shown in the figures, at least one contact lamella or all contact lamellae can be produced by stamping.

Although not shown in the figures, at least the recess, fastening protrusion, fastening element or orientation protrusions may be formed by deep drawing. In other words, the housing shell is continuous in these areas.

### List of reference signs:

| **Reference number** | **Description** |
|---|---|
| 10, 10' | Shield contact system |
| 11 | Current path |
| 100 | Shield contact element |
| 110, 110' | housing shell |
| 112, 112 | First end |
| 114 | Axial direction |
| 116 | second end |
| 120, 1120 | Contact lamella |
| 122 | first contact foot |
| 124 | second contact foot |
| 126 | Third contact foot |
| 130 | Recess |
| 132 | Direction of recess 130 |
| 134, 136 | axial ends of the recess 130 |
| 140 | U-shaped connector |
| 142, 144 | Legs |
| 150 | Offset piece |
| 160 | Fastening protrusion |
| 180 | Orientation highlighting |
| 190, 190' | Fasteners |
| 210 | Shield |
| 300 | Shield contact housing |
| 310 | Stop |
| 400, 400' | Housing |
| 410 | Groove |

## Claims

1. Shield contact element for shielding a plug connection, the shield contact element (100) comprising:
a cylindrical housing shell (110) extending in an axial direction (114) for receiving a plug connector, the plug connector for connecting to a plug contact element to form the plug connection,
at least one contact lamella (120) extending in the axial direction (114) for creating an electrical connection between the housing shell (110) and a shield (210) for shielding the plug contact element,
wherein a contact foot (122) of the contact lamella (120) is disposed in a recess (130) formed in the housing shell (110) to electrically contact the housing shell (110) with the shield (210) in the recess (130).

2. Shield contact element of claim 1, wherein the recess (130) extends from one axial end (112) of the cylindrical housing shell in the axial direction (114) to the other end (116) of the housing shell (110).

3. Shield contact element according to any one of claims 1 to 2, wherein a second contact foot (124) of the contact lamella (120) projects from the housing shell in a direction opposite to a direction (132) of the recess (130), the second contact foot (124) for connecting the shield (210) by form fitting.

4. Shield contact element according to claim 3, that the contact lamella (120) comprises a third contact foot (126), wherein the first contact foot (122) and the third contact foot (126) are arranged in the recess (130) and the second contact foot (124) is adapted to press against the shield (210), optionally wherein the second contact foot (124) is arranged in axial direction between the first contact foot (122) and the third contact foot (126).

5. Shield contact element according to any one of claims 1 to 4, further comprising a U-shaped connector (140) having two legs (142, 144) for fixing the contact lamella (120) to the housing shell (110) and for shortening the current path, optionally wherein the first contact foot (122) is arranged in the recess (130) by bending the U-shaped connector.

6. Shield contact element of claim 5, wherein a leg (142) of the U-shaped connector (140) and the housing shell (110) are connected via the recess (130).

7. Shield contact element of any one of claims 5 or 6, wherein a leg (142) of the U-shaped connector (140) is fixed to an axial end (112) of the cylindrical housing shell (110).

8. Shield contact element of any one of claims 5 to 7, further comprising an offset piece (150), wherein the offset piece (150) is disposed between a leg (142) and the housing shell (100) to offset the U-shaped connector (140) in the direction (132) of the recess (130), optionally wherein the U-shaped connector, the offset piece, the contact lamella (120) and the housing shell (110) are an one-part piece.

9. Shield contact element according to any one of claims 1 to 8, comprising a plurality of contact lamellae (120), wherein a spacing is provided between adjacent contact lamellae, optionally wherein the contact lamellae are manufactured by stamping so that the area between the contact lamellae is sheared off.

10. Shield contact element according to any one of claims 1 to 9, wherein the housing shell (110) comprises two opposing fastening protrusions (160) formed from the housing shell (110), optionally wherein the fastening protrusions (160) project outwardly from the housing shell (110) to brace a shield contact housing (300).

11. Shield contact element according to any one of claims 1 to 10, wherein the housing shell (110) comprises a fastening element (190) formed from the housing shell (110), optionally the fastening element (190) protruding from the housing shell (110) inwardly to lock a housing (400) of the plug connection.

12. Shield contact system with an insulating shield contact housing (300) for receiving in the interior of a shield contact element (100) according to one of claims 1 to 11, wherein the shield contact housing (300) has a stop (310) on the inside which, with the recess (130) formed in the housing shell (110), restricts the axial freedom of movement of the shield contact element (100) in the shield contact housing (300).

13. Method of manufacturing a shield contact element for shielding a plug connection, the method comprising the steps of:
providing a sheet metal,
forming at least one recess in the sheet,
bending the sheet metal into an axial direction extending cylindrical housing shell for receiving a plug connector, the plug connector for connecting to a plug contact element to form the plug connection,
providing at least one in axial direction extending contact lamella for creating an electrical connection between the housing shell and a shield for shielding the plug contact element,
wherein a contact foot of the contact lamella is disposed in the recess formed in the housing shell to contact the housing shell with the shield in the recess.

14. Method of claim 13 further comprising:
punching off the at least one contact lamella from the provided sheet metal and
wherein by bending the sheet, a U-shaped connector is created between the housing shell and the contact lamella, so that the contact foot is arranged in the recess.

15. Method of any one of claims 13 and 14, further comprising:
a deep drawing step to form at least one of the following elements in the sheet:
the recess;
two fastening protrusions formed from the housing shell, optionally wherein the fastening protrusions protruding outwardly from the housing shell after bending and facing each other to brace to a shield contact housing; and
a fastening element formed from the housing shell, optionally wherein the fastening element protruding inwardly from the housing shell after bending, the fastening element to lock a housing of the plug connection.
